# EUROPEAN PATENT SPECIFICATION

(11) **EP 0 670 570 B1**
(45) Date of publication and mention of the grant of the patent: **26.04.2000**
(21) Application number: 95301317.4
(22) Date of filing: 01.03.1995
(51) Int. Cl.: G11B 5/39

(54) **Magnetoresistive head and method of manufacture thereof**
Magnetoresistiver Kopf und Herstellungsverfahren
Tête magnétorésistive et procédé de fabrication

(30) Priority: 03.03.1994 US 206007
(43) Date of publication of application: 06.09.1995
(73) Proprietor: SEAGATE TECHNOLOGY INTERNATIONAL, Georgetown Grand Cayman Island (KY)
(72) Inventor: Schultz, Allen E., St. Paul, Minnesota 55104 (US)
(74) Representative: Kenyon, Sarah Elizabeth

(56) References cited:
- EP-A- 0 516 022
- EP-A- 0 519 558
- EP-A- 0 548 511
- EP-A- 0 574 896
- EP-A- 0 617 409
- DE-A- 4 312 040
- US-A- 5 130 877
- US-A- 5 155 646
- PATENT ABSTRACTS OF JAPAN vol. 13, no. 332 (P-905) [3680] , 26 July 1989 & JP-A-01 096814 (HITACHI LTD), 14 April 1989,
- PATENT ABSTRACTS OF JAPAN vol. 9, no. 177 (P-375) [1900] , 23 July 1985 & JP-A-60 050711 (HITACHI SEISAKUSHO K. K.), 20 March 1985,
- PATENT ABSTRACTS OF JAPAN vol. 10, no. 26 (P-425) [2083] , 31 January 1986 & JP-A-60 177420 (NIPPON DENKI K. K.), 11 September 1985,
- PATENT ABSTRACTS OF JAPAN vol. 14, no. 296 (P-1067) [4239] , 26 June 1990 & JP-A-02 091807 (SANYO ELECTRIC CO LTD), 30 March 1990,
- PATENT ABSTRACTS OF JAPAN vol. 10, no. 308 (P-508) [2364] , 21 October 1986 & JP-A-61 120318 (MATSUSHITA ELECTRIC IND CO LTD), 7 June 1986,
- JOURNAL OF APPLIED PHYSICS, vol. 53, no. 3, March 1982, NEW YORK US, pages 2608-2610, XP002019017 M. HANAZONO ET AL.: "Fabrication of a thin film head using polyimide resin and sputtered Ni-Fe films"

## Description

The present invention relates to a magnetoresistive head for reading information from and writing information to a recording medium, and to a method of manufacturing a magnetoresistive head.

Standard magnetoresistive (MR) heads are fabricated with the writer portion fabricated on top of the reader portion. US Patent No. 4,803,580 discloses one such device.

MR heads are used in magnetic storage systems to detect magnetically encoded information from a magnetic storage medium or disc and to write magnetically encoded information to the storage medium. In a read mode, a time dependent magnetic field associated with a transition from a magnetic storage medium directly modulates the resistivity of an MR element. In operation, the change in resistance of the MR element can be detected by passing a sense current through the MR element and measuring the voltage across the MR element. The resulting signal can be used to recover information or data from the magnetic storage medium.

Practical MR elements are typically formed using ferromagnetic metal alloys because of their high magnetic permeability, an example of which is nickel iron (NiFe). A ferromagnetic material is deposited in a thin film upon the surface of an electrically insulated substrate or wafer. Changing magnetic fields originating from the magnetic storage medium produce a change in the magnetization direction of the MR element and thereby change the resistance of the sensor. This phenomenon is called the MR effect.

The element itself comprises a strip of MR material deposited on a magnetic shield layer to form an MR element. A series of depositions and etching processes form an active region from a portion of the MR element. The active region is the area of the MR element that senses changing magnetic fields from the magnetic storage medium. An upper magnetic shield acts as a barrier between the MR element and the surface of the magnetic storage medium to prevent changing magnetic fields associated with transitions passing by the head from linking back to the element. The magnetic shield also serves to protect the element from receiving stray magnetic fields associated with transitions from surrounding magnetic storage media.

One problem which affects performance of MR heads is the degree to which surfaces in the head can be fabricated flat or "planarized." In particular, in prior art heads, the top shield of an MR sensor has a dip just above the active region of the MR element. This degrades off track performance. Lack of planarization can also cause an electrical short either between the contacts to the MR element and the top shield or between the top shield and subsequent fabricated layers. In addition, the top surface of the bottom shield is usually coated with sendust, which is relatively rough for a thin film. This relatively rough surface can also cause shorting problems between the bottom shield and the contact film. Attempts at planarizing MR readers have focused on smoothing the bottom shield, planarizing the insulator above the MR sensor, or smoothing the top shield. These steps take additional process time and can limit design flexibility.

According to one aspect of the invention, there is provided a method of manufacturing an magnetoresistive head, the method comprising the following sequential steps: fabricating a bottom pole in a basecoat with a recessed portion above the bottom pole distal from an air bearing surface of the head; positioning a polymer insulator and conductive coils in the recessed portion above the bottom pole; planarizing a top surface of the polymer insulator positioned in the recessed portion; fabricating a write gap layer on top of the top surface of the polymer; forming a pole tip of high moment magnetic material in the write gap layer proximal to the air bearing surface; planarizing a top surface of the write gap layer; fabricating a top pole/bottom shield on top of the pole tip and the write gap layer, fabricating a first reader gap on top of the top pole/bottom shield; forming a magnetoresistive element on top of a portion of the first reader gap proximal to the air bearing surface; fabricating electrical contacts on top of a portion of the first reader gap, the contacts electrically connecting the magnetoresistive element to a region outside of the magnetoresistive head; fabricating a second reader gap on top of the electrical contacts and the magnetoresistive element; and fabricating a top shield on top of the second reader gap.

According to another aspect of the invention, there is provided a magnetoresistive head for reading information from a storage medium and for writing information to the storage medium, the magnetoresistive head comprising: a bottom pole having a recessed portion positioned above the bottom pole distal from an air bearing surface of the head; a polymer insulator positioned in the recessed portion of the bottom pole having a plurality of coils spaced throughout the polymer insulator, the polymer insulator having a planarized top surface; a write gap layer positioned on top of the polymer insulator, the write gap layer having a planarized top surface; a pole tip positioned in the write gap layer proximal to the air bearing surface; a top pole/bottom shield positioned on top of a portion of the write gap layer and the pole tip; a first reader gap positioned on top of the top pole/bottom shield; a magnetoresistive element positioned on top of the first reader gap proximal to the air bearing surface; electrical contacts positioned on top of the magnetoresistive element connecting the magnetoresistive element to a region outside the magnetoresistive head; a second reader gap on top of the magnetoresistive element and the contacts; and a shield positioned on top of the second reader gap.

In this arrangement the insulating layer of the write portion may be polymer or another insulating material.

The magnetoresistive heads of the present invention may be referred to as inverted magnetoresistive heads. This term is used in the following text.

In one aspect the present invention is an inverted magnetoresistive head and a method of manufacturing an inverted magnetoresistive head for reading magnetically stored information from a magnetic storage medium. The inverted magnetoresistive head may include a reader positioned on top of a writer. The writer may include a recessed bottom pole filled with coils and polymer insulators above the recessed portion above the bottom pole. This bottom pole and coil structure may then be planarized. A write gap layer may be deposited on top of the planarized bottom pole/coil structure. A high moment material top pole tip may be formed and the remaining part of the top pole structure, which is also the bottom shield of the reader, may then be formed. This bottom shield may be planarized. The first reader gap layer may be deposited on top of the planarized bottom shield. A magnetoresistive element may be formed on top of the first reader gap layer. Contacts may connect the magnetoresistive element to a region outside the magnetoresistive head. A second reader gap may be positioned on top of the magnetoresistive element and the contacts. A top shield may be positioned on top of the second reader gap.

For a better understanding of the invention, an embodiment will now be described by way of example with reference to the accompanying drawings, in which:-

Figure 1A is a cross-sectional view of the layer structure of a prior art magnetoresistive head.

Figure 1B is a cross-sectional view showing the layer structure of the air bearing surface of a prior art magnetoresistive head.

Figure 2 is a cross-sectional view of the layer structure of a bottom pole of a writer of a magnetoresistive head prior to planarization.

Figure 3 is a cross-sectional view of the layer structure of a bottom pole of a writer of a magnetoresistive head after planarization.

Figure 4 is a cross-sectional view of the layer structure of a bottom portion of a writer showing a recessed channel in the write gap.

Figure 5 is a cross-sectional view of the layer structure of a writer of a magnetoresistive head.

Figure 6 is a cross-sectional view showing the layer of the air bearing surface of a writer of a magnetoresistive head.

Figure 7 is a cross-sectional view of the layer structure of a complete magnetoresistive head.

Figure 8 is a cross-sectional view showing the layer structure of the air bearing surface of a complete magnetoresistive head.

Firstly, a prior art magnetoresistive head will be described.

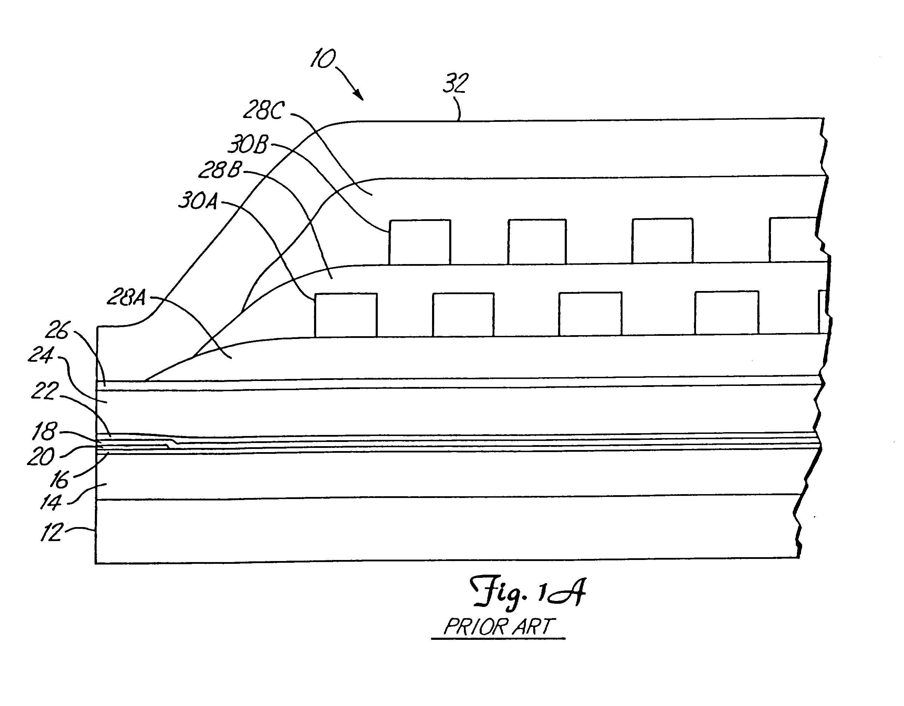

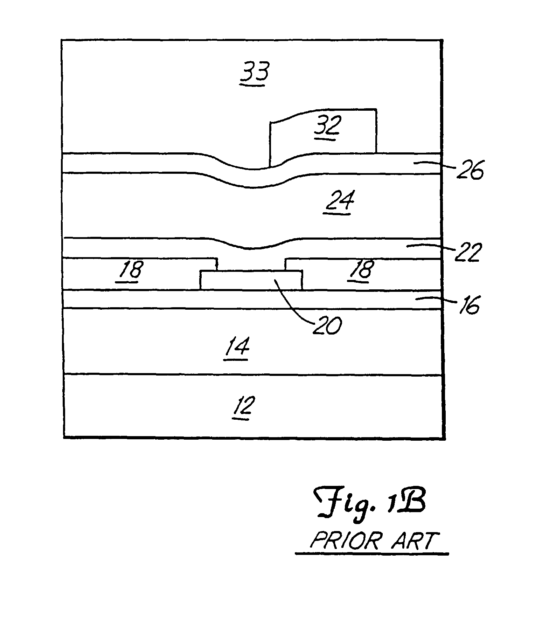

Figure 1A is a cross-sectional view of the layer structure of the prior art magnetoresistive (MR) head 10. MR head 10 of Figure 1 is a standard MR head having the writer portion of the head positioned on top of the reader portion of the head. MR head 10 includes basecoat oxide 12, bottom shield 14, first reader gap oxide layer 16, electrical contacts 18, MR element 20, second reader gap oxide layer 22, top shield/bottom pole 24, write gap oxide layer 26, polymer insulator layers 28a, 28b, and 28c, conductive coil layers 30a and 30b, and top pole 32.

Bottom shield 14 is deposited upon basecoat oxide 12. First read gap oxide layer 16 is then deposited upon bottom shield 14. Next, MR element 20 is deposited in a magnetic field and patterned. MR element 20 is the portion of MR head 10 which senses a magnetic field associated with a transition from a magnetic storage medium during a read operation. Electrical contacts 18 are then deposited on MR element 20 and first read gap oxide layer 16. Second read gap oxide layer 22 is then deposited. The two oxide layers, 16 and 22, comprise the read gaps, inside which MR element 20 is fabricated. Next, top shield/bottom pole 24 is laid down. Top shield/bottom pole 24 is normally utilized to provide the top shield of the reader portion of MR head 10 as well as the bottom pole of the writer portion of MR head 10.

Write gap oxide layer 26 is deposited, followed by polymer insulator layer 28a, conductive coil layer 30a, polymer insulator layer 28b, conductive coil layer 30b, and polymer insulator layer 28c. Finally, top pole 32 is deposited to complete the fabrication of MR head 10. Top shield/bottom pole 24 and top pole 32 provide the writing capability of MR head 10 during a write operation. The number of conductive coils 30 and polymer insulator layers 28 are determined by design and affect the inductance capabilities of the writer portion of MR head 10. Each polymer insulator layer, however, must be cured at temperatures between 200°C and 400°C for varying lengths of time depending upon the specific polymer. Only the lower half of this temperature range for the curing process will avoid possible degradation of the magnetics of the reader portion of MR head 10. This limits the choice of polymers available as insulators for MR head readers.

Figure 1B is a cross-sectional view showing the layer structure of the air bearing surface of the MR head. As shown in Figure 1B, MR head 10 is fabricated such that a top surface of second read gap oxide layer 22 is not flat or planarized. The non-planar surface of second read gap oxide layer 22 dictates that subsequent deposited layers of MR head 10 are also not flat or planarized. In particular, top pole 32, which is covered by overcoat oxide layer 33, can be offset from the center of MR head 10, which can degrade the quality of tracks written from MR head 10. In addition, it is desired that each deposited layer of MR head 10 is flat or planarized to prevent shorting of later deposited layers, thereby rendering MR head 10 inoperable.

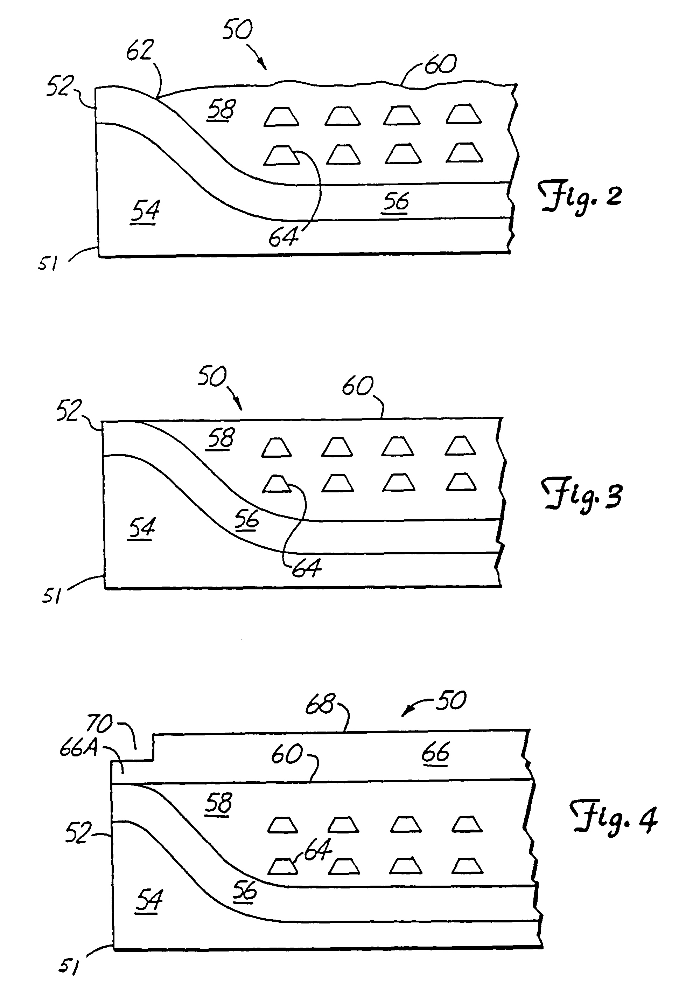

Figure 2 is a cross-sectional view showing the layer structure near air bearing surface 52 of bottom pole 56 according to an embodiment of the present invention. Inverted MR head 50 includes base coat 54, bottom pole 56, polymer insulator 58 having top surface 60 and dip 62, and conductive coils 64. Leading edge 51 is identified relative to air bearing surface 52.

In order to fabricate inverted MR head 50, bottom pole 56, formed from plated permalloy, is initially deposited into a recessed portion of basecoat 54. The recess in basecoat 54 is formed through a combination of chemical etching and ion milling. Polymer insulator 58 and conductive coils 64 fill the recessed portion above bottom pole 56. Conductive coils 64, which are typically made of copper, can be positioned in polymer insulator 58 in one row, or as seen in Figure 2, conductive coils 64 can be positioned in a plurality of rows. The number of conductive coils 64 and polymer insulator layers 58 affects the inductance capabilities of the writer portion of inverted MR head 50.

As shown in Figure 2, top surface 60 of polymer insulator 58 can be somewhat irregular. Dip 62 can arise due to loss of polymer volume during the curing process. In the present embodiment, the top surface 60 of polymer insulator 58 is made flat or planarized so that the remaining layers of inverted MR head 50 which are deposited on top of top surface 60 are deposited on a flat surface. Thus, any rough, jagged portions of top surface 60, including dip 62, should be eliminated.

As shown in Figure 3, all jagged and rough portions of top surface 60, including dip 62, have been eliminated. This elimination is normally done in one of two ways. First, the polymer material forming polymer insulator 58 can be deposited such that top surface 60 is higher than bottom pole 56. Top surface 60 can then undergo both a blanket reactive ion etch-back process and/or a chemical-mechanical polish until top surface 60 of polymer insulator 58 is both smooth and level with bottom pole 56. Second, the polymer material forming polymer insulator 58 can be deposited having rough top surface 60 and dip 62 (shown in Figure 2). A layer of silica can be deposited such that the top surface of the silica layer is slightly above bottom pole 56. Then, photoresist is deposited on top of the silica layer. When the photoresist hardens, it will be perfectly level due to surface tension. The photoresist and silica layer can then undergo a blanket reactive ion etch-back process that removes the silica and photoresist at the same rate, until top surface 60 of polymer insulator 58 is both smooth and entirely flat.

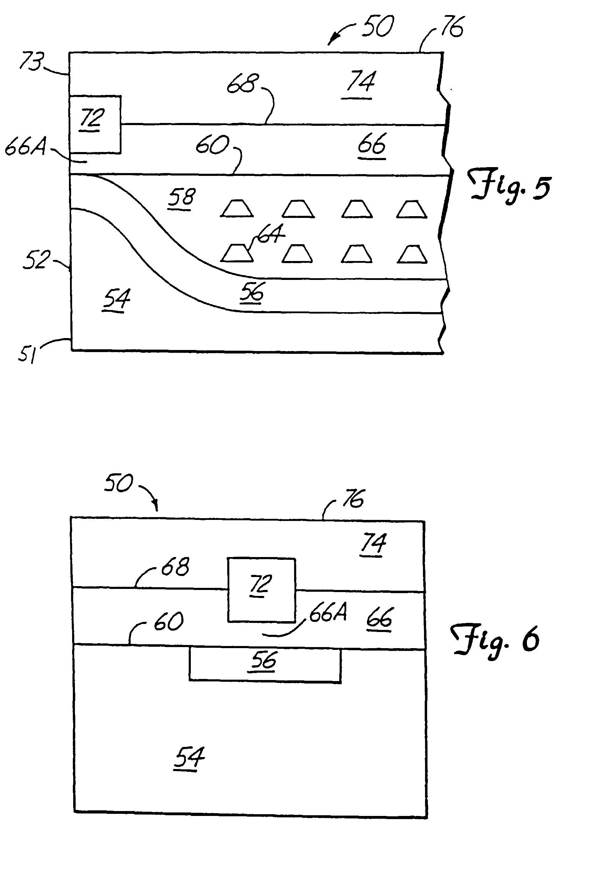

As shown in Figure 4, inverted MR head 50 further includes write gap oxide layer 66 having top surface 68 and channel 70. Write gap oxide layer 66 is deposited on top of top surface 60 of polymer insulator 58. Write gap oxide layer 66 can be formed from a variety of insulating materials, such as silica, alumina, or diamond-like carbon. Channel 70, located near air-bearing surface 52, is then ion-milled into write gap oxide layer 66 to define actual write gap 66a beneath channel 70. This allows extremely accurate definition of the pole tip 72 (shown in Figures 5 and 6). The reason is that the photoresist is deposited upon a flat surface, allowing more precise development of the features in the photoresist mask. Write gap oxide layer 66a at air bearing surface 52 beneath channel 70 has a height in the range of approximately 0.1 microns to 1.0 microns, and preferably in the range of approximately 0.2 to 0.8 microns.

As shown in Figure 5, pole tip 72 is positioned at trailing edge 73 of air bearing surface 52 of inverted MR head 50. Pole tip 72 is an insert formed from a high moment magnetic material such as iron nitride or cobalt iron. A high moment magnetic material is capable of supporting a larger density flux than the permalloy used in standard MR heads. The high moment insert forming pole tip 72 concentrates the magnetic flux and allows writing of a narrow track.

The high momentum magnetic material forming pole tip 72 is either plated or sputtered into channel 70 until it is significantly higher than top surface 68 of write gap oxide layer 66. The thickness of the high moment insert depends upon the magnetic materials in the writer design. Typical values for the thickness of the insert range from 0.5 microns to 2.0 microns, and typical values for the track width of the pole tip range from 2.0 microns to 5.0 microns. In one preferred embodiment of the invention used for plated inserts such as cobalt iron (Co₉₀ Fe₁₀), a non-magnetic seed layer such as nickel vanadium (Ni₈₀ V₂₀) can be used, which then becomes part of the write gap. The protruding section of high moment material is then masked and permalloy is plated around it to obtain an approximately level surface. The masking above the insert is then removed and the entire shield is plated as a unit to the desired thickness. The top surface of the top pole 72/bottom shield 74 combination will very likely contain irregularities, which are then removed by chemical mechanical polishing.

Figure 6 is a side cross-sectional view showing air bearing surface 52 of a writer of inverted MR head 50. As shown in Figure 6, pole tip 72 is aligned above bottom pole 56; with the critical portion of write gap oxide layer 66A located between bottom pole 56 and pole tip 72. The distance between bottom pole 56 and pole tip 72, which is the critical distance of write gap oxide layer 66 is in the range of approximately 100 × 10⁻⁹m (1,000 angstroms) to approximately 1 × 10⁻⁶m (10,000 angstroms), and preferably in the range of approximately 200 × 10⁻⁹m (2,000 angstroms) to approximately 800 × 10⁻⁹m (8,000 angstroms). In one preferred embodiment, bottom pole 56 has a height in the range of approximately 2.0 microns to 4.0 microns, write gap oxide layer 66 formed between top surface 60 of polymer insulator 58 and top surface 68 has a height in the range of approximately 200 × 10⁻⁹m (2,000 angstroms) to approximately 800 × 10⁻⁹m (8,000 angstroms), pole tip 72 has a height in the range of approximately 500 × 10⁻⁹m (5,000 angstroms) to approximately 2 × 10⁻⁶m (20,000 angstroms), and bottom shield 74 between top surface 68 of write gap oxide layer 66 and top surface 76 of bottom shield 74 has a height in the range of approximately 1.5 microns to 4.0 microns.

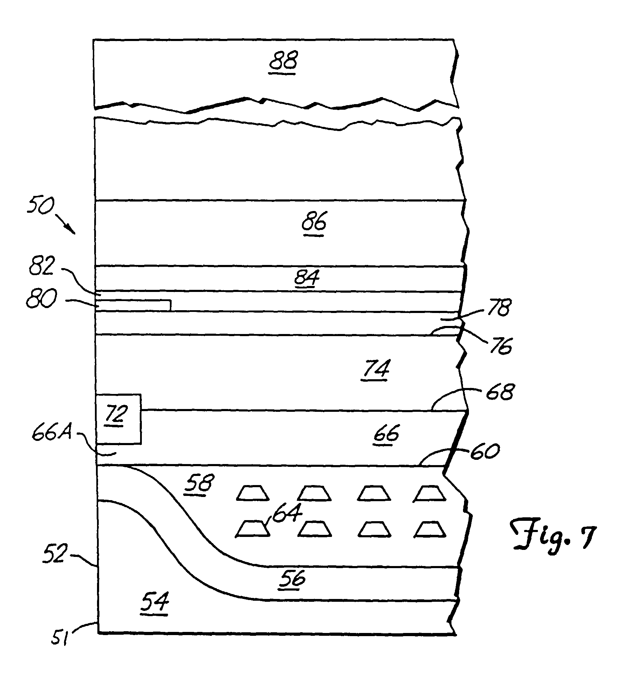

Figure 7 is a cross-sectional view showing the entire fabricated inverted MR head 50, including both the writer and the reader portions of inverted MR head 50. Once bottom shield 74 has been deposited and planarized, the remaining layers of the reader can be deposited on the flat surface of bottom shield 74. Deposition on a series of flat surfaces alleviates shorting, which is a critical issue in standard MR heads.

Once the writer portion of inverted MR head 50 has been fabricated, first reader gap oxide layer 78 is deposited on top of bottom shield 74. In one preferred embodiment, first reader gap oxide layer 78 has a height of less than 400 × 10⁻⁹m (4,000 Angstroms). MR element 80 is fabricated on first reader gap oxide layer 78 near trailing edge 73 of inverted MR head 50. MR element 80 may be a single film or composite film structure. The specific embodiment of MR element 80 does not affect the usefulness of MR head 50. Electrical contacts 82 are then deposited, followed by second reader gap oxide layer 84, top shield 86, and overcoat oxide layer 88. In one preferred embodiment, second reader gap oxide layer 84 has a height of less than 400 × 10⁻⁹m (4, 000 Angstroms) and the top shield 86 has a height in the range of approximately 1.5 microns to 4.0 microns. In addition, a boundary control stabilization layer, a permanent magnet stabilization layer, and/or an additional layer of contacts for inductive cancellation or low circuit resistance can be incorporated into the MR reader if necessary for a particular application.

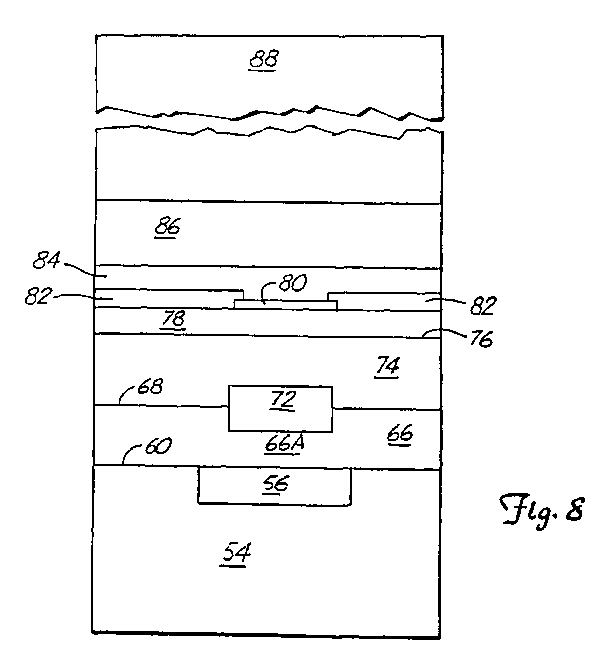

Figure 8 is an air bearing surface view of inverted MR head 50 showing both the reader and the writer. As shown in Figure 8, bottom pole 56, top pole 72, and MR element 80 are aligned with one another. This invention improves the accuracy of the alignment of the MR sensor to the top pole, since there are only one or two intervening mask layers to complicate mask alignment, as compared to ten or more intervening mask layers in prior art non-inverted MR heads. The alignment of bottom pole 56, top pole 72, and MR element 80 is critical in forming an MR head which can both precisely read information from a magnetic storage medium and write information to the magnetic storage medium.

There are several advantages of inverted MR head 50 of the described embodiment of the present invention. First, precise definition of the top pole 72 is achieved. Second, the distance between MR element 80 and top pole 72 is substantially reduced over the prior art. This allows inverted MR head 50 to write higher linear densities on the disc or other magnetic storage medium. Third, planarity of the top pole 72 allows the reader and the writer to be offset without the top pole having a dip in it, such as the dip of the prior art shown in Figure 1B. Fourth, use of sendust or other rough films for the top shield will not cause shorting due to roughness, since the only film above the top shield surface is the overcoat. Fifth, building the writer prior to building the reader allows use of high temperature curing polymers such as polyimide and benzene cyclo-butene (BCB) without degrading the MR sensor magnetics or other properties. Sixth, building the writer prior to building the reader allows use of spin valves or giant MR sensors since high temperature polymer cures could cause interdiffusion among the extremely thin layers of giant MR sensors or spin valves, thus destroying their effectiveness. Giant MR sensors have a structure consisting of layers of magnetic and layers of non-magnetic material, preferably ferromagnetic/non-ferromagnetic material or materials similar thereto. Permalloy may or may not be part of the layered pattern. In such MR sensors the change in resistance due to the position of a given magnetic filed can be in excess of 65%. By having all high temperature cures completed before the reader portion is built, few restrictions are placed on the use of giant MR and/or spin valves sensors. In particular, the materials for the reader and writer may be optimized independently of each other to a much greater extent than the prior art.

The aforementioned description has been given by way of example only and it will be appreciated by a person skilled in the art that modifications can be made without departing from the scope of the present invention.

## Claims

1. A method of manufacturing a magnetoresistive head (50), the method comprising the following sequential steps:
fabricating a bottom pole (56) in a basecoat (54) with a recessed portion above the bottom pole distal from an air bearing surface (52) of the head (50);
positioning a polymer insulator (58) and conductive coils (64) in the recessed portion above the bottom pole (56);
planarizing a top surface (60) of the polymer insulator (58) positioned in the recessed portion;
fabricating a write gap layer (66) on top of the top surface (60) of the polymer;
forming a pole tip (72) of high moment magnetic material in the write gap layer (66) proximal to the air bearing surface (52);
planarizing a top surface of the write gap layer (66);
fabricating a top pole/bottom shield (74) on top of the pole tip (72) and the write gap layer (66);
fabricating a first reader gap (78) on top of the top pole/bottom shield (74);
forming a magnetoresistive element (80) on top of a portion of the first reader gap (78) proximal to the air bearing surface (52);
fabricating electrical contacts (82) on top of a portion (78) of the first reader gap (78), the contacts electrically connecting the magnetoresistive element (80) to a region outside of the magnetoresistive head (50);
fabricating a second reader gap (84) on top of the electrical contacts (82) and the magnetoresistive element (80); and
fabricating a top shield (86) on top of the second reader gap (84).

2. The method of claim 1 wherein the step of fabricating a bottom pole (56) further comprises plating polymer into the basecoat (54).

3. The method of claim 1 or 2 wherein the step of planarizing the top surface (60) of the polymer insulator (58) further comprises reactive ion etching the top surface (60) of the polymer insulator (58) and/or polishing the top surface of the polymer insulator (58) with a chemical-mechanical polish until the top surface of the polymer insulator (58) is substantially smooth.

4. The method of claim 1 or 2 wherein the step of planarizing the top surface of the polymer insulator (58) further comprises:
depositing a layer of silica on top of the top surface of the polymer insulator (58);
depositing a photoresist layer on top of the silica layer; and
reactive ion etching the silica layer and the photoresist layer until the top surface of the polymer insulator (58) is substantially smooth.

5. The method of any one of the preceding claims wherein the bottom pole (56) is made of a plated permalloy.

6. The method of any one of the preceding claims wherein the write gap layer (66) is formed from silica, diamond-like carbon and/or alumina.

7. The method of any preceding claim further comprising ion milling a channel (70) into the write gap layer (66); and filling the channel (70) with the high moment magnetic material (72).

8. A magnetoresistive head (50) for reading information from a storage medium and for writing information to the storage medium, the magnetoresistive head comprising:
a bottom pole (56) having a recessed portion positioned above the bottom pole distal from an air bearing surface (52) of the head (50);
a polymer insulator (58) positioned in the recessed portion of the bottom pole (56) having a plurality of coils (64) spaced throughout the polymer insulator (58), the polymer insulator (58) having a planarized top surface (60);
a write gap layer (66) positioned on top of the polymer insulator (58), the write gap layer having a planarized top surface;
a pole tip (72) positioned in the write gap layer (66) proximal to the air bearing surface (56);
a top pole/bottom shield (74) positioned on top of a portion of the write gap layer (66) and the pole tip (72);
a first reader gap (78) positioned on top of the top pole/bottom shield (74);
a magnetoresistive element (80) positioned on top of the first reader gap (78) proximal to the air bearing surface (56);
electrical contacts (82) positioned on top of the magnetoresistive element (80) connecting the magnetoresistive element to a region outside the magnetoresistive head (50);
a second reader gap (84) on top of the magnetoresistive element (80) and the contacts (82); and
a shield (86) positioned on top of the second reader gap.

9. The magnetoresistive head of claim 8 wherein a portion of a write gap positioned between the bottom pole (56) and the pole tip (72) has a height in the range of approximately 0.1 microns to 1.0 microns.

10. The magnetoresistive head of claim 8 or 9 wherein the bottom pole (56) has a height in the range of approximately 2.0 microns to 4.0 microns.

11. The magnetoresistive head of claim 8, 9 or 10 wherein the write gap layer (66) between the bottom pole (56) and the pole tip (72) has a height in the range of approximately 100 × 10⁻⁹m (1,000 angstroms) to 1 × 10⁻⁶m (10,000 angstroms).

12. The magnetoresistive head of any one of claims 8 to 11 wherein the pole tip (72) has a height in the range of approximately 500 × 10⁻⁹m (5,000 angstroms) to 2 x 10⁻⁶m (20,000 angstroms).

13. The magnetoresistive head of any one of claims 8 to 12 wherein the bottom shield (74) has a height in the range of approximately 1.5 microns to 4.0 microns.

14. The magnetoresistive head of any one of claims 8 to 13 wherein the first read gap oxide layer (78) and/or second read gap oxide layer (84) has a height of less than 400 × 10⁻⁶m (4,000 angstroms).

15. The magnetoresistive head of any one of claims 8 to 14 wherein the top shield (86) has a height in the range of approximately 1.5 microns to 4.0 microns.

16. The magnetoresistive head of any one of claims 8 to 15 wherein the pole tip (72) further comprises a high moment magnetic material (72) which fills a channel in which the write gap layer (66) proximate to the air bearing surface (52).

17. The magnetoresistive head of any one of claims 8 to 16, wherein said top surface (60) of said polymer insulator (58) is substantially smooth.

18. The magnetoresistive head of any one of claims 8 to 17, wherein said bottom pole (56) is made of a plated permalloy; and/or said write gap layer (66) is formed from silica, diamond-like carbon and/or alumina.

## Patentansprüche

1. Verfahren zur Herstellung eines magnetoresistiven Kopfes (50), wobei das Verfahren die nachstehenden aufeinanderfolgenden Schritte umfaßt:
Herstellen eines unteren Pols (56) in einer Basisbeschichtung (54) mit einem vertieften Abschnitt oberhalb des unteren Pols an einer von der Luftlageroberfläche (52) des Kopfes (50) entfernten Stelle,
Anordnen eines Polymer-Isolators (58) und leitender Wicklungen (64) in dem vertieften Abschnitt oberhalb des unteren Pols (56),
Einebnen einer oberen Oberfläche (60) des Polymer-Isolators (58), der in dem vertieften Abschnitt angeordnet ist,
Herstellen einer Schreibspaltschicht (66) über der oberen Oberfläche des Polymers,
Bilden einer Polspitze (72) aus einem ein hohes magnetisches Moment aufweisenden Material in der Schreibspaltschicht (66) an einer der Luftlageroberfläche (52) benachbarten Stelle,
Einebnen einer oberen Oberfläche der Schreibspaltschicht (66),
Herstellen eines oberen Pols bzw. einer unteren Abschirmung (74) auf der Oberseite der Polspitze (72) und der Schreibspaltschicht (66),
Herstellen eines ersten Lesespaltes (78) auf der Oberseite des oberen Pols bzw. der unteren Abschirmung (74),
Ausbilden eines magnetoresistiven Elementes (80) auf der Oberseite eines Teils des ersten Lesespaltes (78) benachbart zur Luftlageroberfläche (52),
Herstellen elektrischer Kontakte (82) auf der Oberseite eines Teils (78) des ersten Lesespaltes (78), wobei die Kontakte elektrisch das magnetoresistive Element (80) mit einem Bereich außerhalb des magnetoresistiven Kopfes (50) verbinden,
Herstellen eines zweiten Lesespaltes (84) auf der Oberseite der elektrischen Kontakte (82) und des magnetoresistiven Elementes (80), und
Herstellen einer oberen Abschirmung (86) auf der Oberseite des zweiten Lesespaltes (84).

2. Verfahren nach Anspruch 1, bei dem der Schritt der Herstellung eines unteren Pols (56) weiterhin die Plattierung eines Polymer-Materials in die Basisbeschichtung (54) umfaßt.

3. Verfahren nach Anspruch 1 oder 2, bei dem der Schritt des Einebnens der oberen Oberfläche (60) des Polymer-Isolators (58) weiterhin das reaktive lonenätzen der oberen Obefläche (60) des Polymer-Isolators (58) und/oder das Polieren der oberen Oberfläche des Polymer-Isolators (58) mit einem chemisch-mechanischen Poliermittel umfaßt, bis die obere Oberfläche des Polymer-Isolators (58) im wesentlichen glatt ist.

4. Verfahren nach 1 oder 2, bei dem der Schritt des Einebnens der oberen Oberfläche des Polymer-Isolators (58) weiterhin folgendes umfaßt:
Abscheiden einer Schicht aus Siliziumdioxid auf der Oberseite der oberen Oberfläche des Polymer-Isolators (58),
Abscheiden einer Photoabdecklackschicht auf der Oberseite der Siliziumdioxidschicht, und
reaktives lonenätzen der Siliziumdioxidschicht und der Photoabdecklackschicht, bis die obere Oberfläche des Polymer-Isolators (58) im wesentlichen glatt ist.

5. Verfahren nach einem der vorhergehenden Ansprüche, bei dem der untere Pol (56) aus plattiertem Permalloy-Material hergestellt wird.

6. Verfahren nach einem der vorhergehenden Ansprüche, bei dem die Schreibspaltschicht (66) aus Siliziumdioxid, diamantförmigem Kohlenstoff und/oder Aluminiumoxid gebildet ist.

7. Verfahren nach einem der vorhergehenden Ansprüche, das weiterhin das lonenfräsen eines Kanals (70) in die Schreibspaltschicht (66) und das Füllen des Kanals (70) mit dem ein hohes magnetisches Moment aufweisenden Material (72) umfaßt.

8. Magnetoresistiver Kopf (50) zum Lesen von Informationen von einem Speichermedium und zum Schreiben von Informationen auf das Speichermedium, wobei der magnetoresistive Kopf folgendes umfaßt:
einen unteren Pol (56) mit einem vertieften Abschnitt, der über dem unteren Pol an einer von der Luftlageroberfläche (52) des Kopfes (50) entfernten Stelle angeordnet ist,
einen Polymer-Isolator (58), der in dem vertieften Abschnitt des unteren Pols (56) angeordnet ist und eine Vielzahl von Wicklungen (64) aufweist, die mit Abstand über den gesamten Polymer-Isolator (58) angeordnet sind, wobei der Polymer-Isolator (58) eine eingeebnete obere Oberfläche (60) aufweist,
eine Schreibspaltschicht (66), die auf der Oberseite des Polymer-Isolators (58) angeordnet ist, wobei die Schreibspaltschicht eine eingeebnete obere Oberfläche aufweist,
eine Polspitze (72), die in der Schreibspaltschicht (66) benachbart zu der Luftlageroberfläche (56) angeordnet ist,
einen oberen Pol bzw. eine untere Abschirmung (74), die über einem Teil der Schreibspaltschicht (66) und der Polspitze (72) angeordnet ist,
einen ersten Lesespalt (78), der auf der Oberseite des oberen Pols bzw. der unteren Abschirmung (74) angeordnet ist,
ein magnetoresistives Element (80), das auf der Oberseite des ersten Lesespaltes (78) benachbart zu der Luftlageroberfläche (56) angeordnet ist,
elektrische Kontakte (82), die auf der Oberseite des magnetoresistiven Elementes (80) angeordnet sind und das magnetoresistive Element mit einem Bereich außerhalb des magnetoresistiven Kopfes (50) verbinden,
einen zweiten Lesespalt (84) auf der Oberseite des magnetoresistiven Elementes (80) und der Kontakte (82), und
eine Abschirmung (86), die auf der Oberseite des zweiten Lesespaltes angeordnet ist.

9. Magnetoresistiver Kopf nach Anspruch 8, bei dem ein Teil eines Schreibspaltes, der zwischen dem unteren Pol (56) und der Polspitze (72) angeordnet ist, eine Höhe im Bereich von ungefähr 0,1 µm bis 1,0 µm aufweist.

10. Magnetoresistiver Kopf nach Anspruch 8 oder 9, bei dem der untere Pol 56 eine Höhe im Bereich von ungefähr 2,0 µm bis 4,0 µm aufweist.

11. Magnetoresistiver Kopf nach Anspruch 8, 9 oder 10, bei dem die Schreibspaltschicht (66) zwischen dem unteren Pol (56) und der Polspitze (72) eine Höhe im Bereich von ungefähr 100 x 10⁻⁹ m (1000 Å) bis 1 x 10⁻⁶ m (10000 Å) aufweist.

12. Magnetoresistiver Kopf nach einem der Ansprüche 8-11, bei dem die Polspitze (72) eine Höhe im Bereich von ungefähr 500 x 10⁻⁹ m (5000 Å) bis 2 x 10⁻⁶ m (20000 Å) aufweist.

13. Magnetoresistiver Kopf nach einem der Ansprüche 8-12, bei dem die untere Abschirmung eine Höhe in dem Bereich von ungefähr 1,5 µm bis 4,0 µm aufweist.

14. Magnetoresistiver Kopf nach einem der Ansprüche 8 bis 13, bei dem die erste Lesespalt-Oxidschicht (78) und/oder die zweite Lesespalt-Oxidschicht (84) eine Höhe von weniger als 400 x 10⁻⁹ m (4000 Å) aufweist.

15. Magnetoresistiver Kopf nach einem der Ansprüche 8 bis 14, bei dem die obere Abschirmung (86) eine Höhe im Bereich von ungefähr 1,5 µm bis 4,0 µm aufweist.

16. Magnetoresistiver Kopf nach einem der Ansprüche 8 bis 15, bei dem die Polspitze (72) weiterhin ein ein hohes magnetisches Moment aufweisendes Material (72) umfaßt, das einen Kanal in der Schreibspaltschicht (66) benachbart zur Luftlageroberfläche (52) füllt.

17. Magnetoresistiver Kopf nach einem der Ansprüche 8 bis 16, bei dem die obere Oberfläche (60) des Polymer-Isolators (58) im wesentlichen glatt ist.

18. Magnetoresistiver Kopf nach einem der Ansprüche 8 bis 17, bei dem der untere Pol (56) aus plattiertem Permalloy hergestellt ist und/oder wobei die Schreibspaltschicht (66) aus Siliziumdioxid, diamantförmigem Kohlenstoff und/oder Aluminium hergestellt ist.

## Revendications

1. Procédé de fabrication d'une tête magnétorésistive (50), le procédé comprenant les étapes séquentielles suivantes consistant à :
fabriquer un pôle inférieur (56) dans une couche de base (54) avec une partie évidée au-dessus du pôle inférieur, distale d'une surface de coussin d'air (52) de la tête (50) ;
positionner un isolateur polymère (58) et des bobines conductrices (64) dans la partie évidée au-dessus du pôle inférieur (56) ;
rendre plane une surface supérieure (60) de l'isolateur polymère (58) positionné dans la partie évidée ;
fabriquer une couche d'entrefer d'écriture (66) au-dessus de la surface supérieure (60) du polymère ;
former une pointe polaire (72) constituée d'un matériau à moment magnétique élevé dans la couche d'entrefer d'écriture (66) à proximité de la surface de coussin d'air (52) ;
rendre plane une surface supérieure de la couche d'entrefer d'écriture (66) ;
fabriquer un blindage inférieur/pôle supérieur (74) au-dessus de la pointe polaire (72) et de la couche d'entrefer d'écriture (66) ;
fabriquer un premier entrefer de lecture (78) au-dessus du blindage inférieur/pôle supérieur (74) ;
former un élément magnétorésistif (80) au-dessus d'une partie du premier entrefer de lecture (78) à proximité de la surface de coussin d'air (52) ;
fabriquer des contacts électriques (82) au-dessus d'une partie (78) du premier entrefer de lecture (78), les contacts connectant électriquement l'élément magnétorésistif (80) à une région à l'extérieur de la tête magnétorésistive (50) ;
fabriquer un second entrefer de lecture (84) au-dessus des contacts électriques (82) et de l'élément magnétorésistif (80) ; et
fabriquer un blindage supérieur (86) au-dessus du second entrefer de lecture (84).

2. Procédé selon la revendication 1, dans lequel l'étape consistant à fabriquer un pôle inférieur (56) comprend en outre l'électrodéposition du polymère dans la couche de base (54).

3. Procédé selon la revendication 1 ou 2, dans lequel l'étape consistant à rendre plane la surface supérieure (60) de l'isolateur polymère (58) comprend en outre l'attaque par ions réactifs de la surface supérieure (60) de l'isolateur polymère (58) et/ou le polissage de la surface supérieure de l'isolateur polymère (58) avec un agent de polissage chimique-mécanique jusqu'à ce que la surface supérieure de l'isolateur polymère (58 ) soit sensiblement uniforme.

4. Procédé selon la revendication 1 ou 2, dans lequel l'étape consistant à rendre plane la surface supérieure de l'isolateur polymère (58) comprend en outre les étapes consistant à :
déposer une couche de silice au-dessus de la surface supérieure de l'isolateur polymère (58) ;
déposer une couche de résine photosensible au-dessus de la couche de silice ; et
attaquer par ions réactifs la couche de silice et la couche de résine photosensible jusqu'à ce que la surface supérieure de l'isolateur polymère (58) soit sensiblement uniforme.

5. Procédé selon l'une quelconque des revendications précédentes, dans lequel le pôle inférieur (56) est constitué de permalloy électrodéposé.

6. Procédé selon l'une quelconque des revendications précédentes, dans lequel la couche d'entrefer d'écriture (66) est formée à partir de silice, de carbone du type diamant et/ou d'alumine.

7. Procédé selon l'une quelconque des revendications précédentes, comprenant en outre le meulage ionique d'un canal (70) dans la couche d'entrefer d'écriture (66) et le remplissage du canal (70) avec le matériau à moment magnétique élevé (72).

8. Tête magnétorésistive (50) pour lire des informations depuis un support de stockage et pour écrire les informations sur le support de stockage, la tête magnétorésistive comprenant :
un pôle inférieur (56) ayant une partie évidée positionnée au-dessus du pôle inférieur, distale d'une surface de coussin d'air (52) de la tête (50);
un isolateur polymère (58) positionné dans la partie évidée du pôle inférieur (56) ayant une pluralité de bobines (64) espacées sur tout l'isolateur polymère (58), l'isolateur polymère (58) ayant une surface supérieure rendue plane (60) ;
une couche d'entrefer d'écriture (66) positionnée au-dessus de l'isolateur polymère (58), la couche d'entrefer d'écriture ayant une surface supérieure rendue plane ;
une pointe polaire (72) positionnée dans la couche d'entrefer d'écriture (66) à proximité de la surface de coussin d'air (56) ;
un blindage inférieur/pôle supérieur (74) positionné au-dessus d'une partie de la couche d'entrefer d'écriture (66) et de la pointe polaire (72);
un premier entrefer de lecture (78) positionné au-dessus du blindage inférieur/pôle supérieur (74) ;
un élément magnétorésistif (80) positionné au-dessus du premier entrefer de lecture (118) à proximité de la surface de coussin d'air (56) ;
des contacts électriques (82) positionnés au-dessus de l'élément magnétorésistif (80) connectant l'élément magnétorésistif à une région à l'extérieur de la tête magnétorésistive (50) ;
un second entrefer de lecture (84) au-dessus de l'élément magnétorésistif (80) et des contacts (82) ; et
un blindage (86) positionné au-dessus du second entrefer de lecture.

9. Tête magnétorésistive selon la revendication 8, dans laquelle une partie d'un entrefer d'écriture positionné entre le pôle inférieur (56) et la pointe polaire (72) présente une hauteur dans la plage d'environ 0,1 µm à 1,0 µm.

10. Tête magnétorésistive selon la revendication 8 ou 9, dans laquelle le pôle inférieur (56) présente une hauteur dans la plage d'environ 2,0 µm à 4,0 µm.

11. Tête magnétorésistive selon la revendication 8, 9 ou 10, dans laquelle la couche d'entrefer d'écriture (66) entre le pôle inférieur (56) et la pointe polaire (72) présente une hauteur dans la plage d'environ 100 x 10⁻⁹m (1 000 Angstroms) à 1 x 10⁻⁶m (10 000 Angstroms).

12. Tête magnétorésistive selon l'une quelconque des revendications 8 à 11, dans laquelle la pointe polaire (72) présente une hauteur dans la plage d'environ 500 x 10⁻⁹m (5000 Angstroms) à 2x 10⁻⁶m (20 000 Angstroms).

13. Tête magnétorésistive selon l'une quelconque des revendications 8 à 12, dans laquelle le blindage inférieur (74) présente une hauteur dans la plage d'environ 1,5 µm à 4,0 µm.

14. Tête magnétorésistive selon l'une quelconque des revendications 8 à 13, dans laquelle la première couche d'oxyde d'entrefer de lecture (78) et/ou la seconde couche d'oxyde d'entrefer de lecture (84) présente une hauteur inférieure à 400 x 10⁻⁹m (4000 Angstroms).

15. Tête magnétorésistive selon l'une quelconque des revendications 8 à 14, dans laquelle le blindage supérieur (86) présente une hauteur dans la plage d'environ 1,5 µm à 4,0 µm.

16. Tête magnétorésistive selon l'une quelconque des revendications 8 à 15, dans laquelle la pointe polaire (72) comprend en outre un matériau à moment magnétique élevé (72) qui remplit un canal dans lequel la couche d'entrefer d'écriture (66 ) se trouve à proximité de la surface de coussin d'air (52).

17. Tête magnétorésistive selon l'une quelconque des revendications 8 à 16, dans laquelle ladite surface supérieure (60) dudit isolateur polymère (58) est sensiblement uniforme.

18. Tête magnétorésistive selon l'une quelconque des revendications 8 17, dans laquelle ledit pôle inférieur (56) est constitué de permalloy électrodéposé ; et/ou ladite couche d'entrefer d'écriture (66) est formée à partir de silice, de carbone du type diamant et/ou d'alumine.
